# EUROPÄISCHE PATENTANMELDUNG

(11) **EP 2 017 223 A2**
(43) Veröffentlichungstag der Anmeldung: **21.01.2009**
(21) Anmeldenummer: 07107134.4
(22) Anmeldetag: 27.04.2007
(51) Int. Cl.: C01D 7/00, C01D 7/10, B01D 53/62

(54) **Verfahren und Vorrichtung zur Energiegewinnung und Meerwasserentsalzung mit kontrolliertem Einsatz von Treibhausgasen sowie zur Bereitstellung von Holzkohleartigen Düngern mit negativem CO2-Beitrag**

(30) Priorität: 11.01.2007 EP 07100387; 15.03.2007 EP 07104246
(71) Anmelder: Silicon Fire AG, 6045 Meggen (CH)
(72) Erfinder: Krass, Florian, Dr., 6353 Weggis (CH); Pretterebner, Julius, Dr., 71570 Oppenweiler (DE); Heusch, Christian, Dr.-Ing., 8800 Thalwil (CH)
(74) Vertreter: OK pat AG

(57) **Zusammenfassung**

Verfahren zum Erzeugen von Energie und Binden von gasförmigem CO₂, wobei aus Meerwasser unter Energiezufuhr eine konzentrierte Salzsole erzeugt wird. Die entsprechende Energie stammt mindestens zum Teil aus einer Biogasanlage, die Biogas erzeugt. Dann wird Ammoniak (NH₃) und das zu bindende CO₂ aus einem parallelen Prozess in die konzentrierte Salzsole eingeleitet. Dabei das CO₂ aus in einer Flüssigkeit oder einem Feststoff dauerhaft gebunden. Im Rahmen des beschriebenen Verfahrens wird aus dem Meerwasser auch Süsswasser erzeugt, das vorteilhafterweise eingesetzt wird, um durch Bewässerung das Anlegen "grüner Lungen" zu unterstützen. Ausserdem kann Dünger erzeugt werden.

## Beschreibung

Die vorliegende Anmeldung beansprucht die Prioritäten
- der Patentanmeldung EP 07 100 387.5, die am 11. Januar 2007 beim EPA eingereicht wurde, und
- der Patentanmeldung EP 07 104 246.9, die am 15. März 2007 beim EPA eingereicht wurde.

Die vorliegende Anmeldung betrifft Verfahren und Vorrichtungen zur Energiegewinnung in Verbindung mit Meerwasserentsalzung. Weiterhin betrifft die Anmeldung Wege zur Bereitstellung von Dünger mit negativem CO₂-Beitrag.

Kohlenstoffdioxid (meist Kohlendioxid genannt) ist eine chemische Verbindung aus Kohlenstoff und Sauerstoff. Kohlendioxid ist ein farb- und geruchloses Gas. Es ist mit einer geringen Konzentration ein natürlicher Bestandteil der Luft und entsteht in Lebewesen bei der Zellatmung, aber auch bei der Verbrennung von kohlenstoffhaltigen Substanzen unter ausreichendem Sauerstoff. Seit Beginn der Industrialisierung steigt der CO₂-Anteil in der Atmosphäre deutlich an. Hauptursache hierfür sind die vom Menschen verursachten - die sogenannten anthropogenen - CO₂-Emissionen.

Das Kohlendioxid in der Atmosphäre absorbiert einen Teil der Wärmestrahlung. Diese Eigenschaft macht Kohlendioxid zu einem so genannten Treibhausgas und ist einer der Mitverursacher des Treibhauseffekts.

Aus diesen und auch aus anderen Gründen wird zur Zeit in verschiedenste Richtungen geforscht und entwickelt, um einen Weg zu finden, um die anthropogenen CO₂-Emissionen zu reduzieren. Besonders im Zusammenhang mit der Energieerzeugung, die häufig durch das Verbrennen fossiler Energieträger, wie Kohle oder Gas, erfolgt, aber auch bei anderen Verbrennungsprozessen, zum Beispiel bei der Müllverbrennung, entstehen grosse Mengen von CO₂ und es besteht ein entsprechend grosser Bedarf zur CO₂ Reduktion. Es werden pro Jahr Milliarden von Millionen Tonnen CO₂ durch solche Prozesse in die Atmosphäre abgegeben.

Ammoniak (NH₃) ist ein weiterer Stoff, der die Umwelt belastet. Ammoniak in der Luft stammt gegenwärtig zu 90% aus der Landwirtschaft. Der weitaus grösste Teil von NH₃-Verflüchtigungen kommt aus der Tierhaltung. Das Tier scheidet Harn und Kot aus, welche Stickstoffverbindungen enthalten. Dabei liegt Stickstoff im Harn zum grössten Teil als Harnstoff vor. Harnstoff wird besonders unter Luft- und Wärmeeinfluss sehr schnell zu Ammoniak umgebaut. Ammoniak wiederum entweicht gasförmig in die Luft. Dies bedeutet, dass von Flächen, wo Hofdünger unter Wärme und insbesondere auch Lufteinfluss stehen, erhöhte Mengen an Ammoniak entweichen.

Ammoniakemissionen stellen die Umwelt vor Probleme. NH₃ wird über die Luft verfrachtet. Ebenfalls trägt Ammoniak zur Versauerung von Böden bei und wirkt zudem korrosiv an Bauten. Ammoniak hat aber auch eine kommerzielle Bedeutung. Für den Landwirt bedeutet z.B. der NH₃-Verlust ein Verlust an wertvollem Stickstoffdünger.

Neben dem genannten Ammoniak, kommen in der Land- und Viehwirtschaft häufig eine oder mehrere der folgenden Substanzen vor: Methan (CH₄), Altöl, Biomasse, Brennholz, Dung, etc. Auch heute noch werden diese Stoffe als Abfallstoffe angesehen, deren Entsorgung aufwendig und teuer ist. Dabei gibt es mittlerweile zahlreiche Beispiele, die aufzeigen, dass auch in diesen Stoffen verwertbare (Rest-)Energie steckt.

Methan ist ein Gas. Es ist das einfachste Alkan und der einfachste Kohlenwasserstoff überhaupt. Methan ist der Hauptbestandteil von Erdgas und Biogas und stellt einen wichtigen Bestandteil von Holzgas dar.

Methan zum Beispiel entsteht bei Kühen und mehr oder weniger auch bei anderen Tieren. Methan ist das Resultat von Gärprozessen an denen Bakterien mitwirken, die mit dem Futter aufgenommene Zellulose zerlegen.

Heute wird Methan als Brennstoff in Biogasanlagen hergestellt. Dabei wird in zunehmendem Umfang die bakterielle Zersetzung organischer Verbindungen wirtschaftlich genutzt, indem aus (Kuh-)Mist, (Schweine-)Gülle, Klärschlamm oder organischem Müll Biogas gewonnen wird.

Es ist bekannt, dass Methan mit Sauerstoff unterschiedliche Reaktionen eingeht, je nachdem wie viel Sauerstoff für die Reaktion zur Verfügung steht. Bei genügend großem Sauerstoffangebot ist eine vollständige Verbrennung des Methans mit optimaler Energieausbeute möglich. Dabei entsteht Wasser und Kohlendioxid nach Gleichung (1)

CH₄ + O₂→ CO₂ + H₂O ΔH⁰ = -803 kJ mol⁻¹ (1).

Methan wird mittlerweile eingesetzt, um durch Verbrennen (z.B. mittels eines Gasmotors) vor Ort Energie zu erzeugen. Bei diesen Verbrennungsprozessen entsteht aber wiederum Kohlendioxid in grossen Mengen (siehe Gleichung (1)). Es ist ein weiterer Nachteil der entsprechenden Biogasanlagen, dass sie bei der Verstromung neben dem Strom eine grosse Menge an Abwärme erzeugen. Die Energiebilanz derartiger Biogasanlagen ist positiv, wenn man mit der Abwärme z.B. umstehende Gebäude heizt. Das verlangt aber wiederum ein teueres und aufwendiges Leitungsnetz, um die dezentralisierten Biogasanlagen in ein Fernwärmenetz einzubinden.

Ein weiteres Problem baut sich derzeit durch die Zunahme von Meerwasserentsalzungsanlagen auf. Die bisher betriebene Form der Meerwasserentsalzung führt zu einer verstärkten Belastung der Meere mit Salzfrachten, die bei der Gewinnung von Trinkwasser wieder ins Meer zurück fliessen. Zusammen mit der globalen Klimaerwärmung und der Zunahme der Verdunstung, wird sich der Salzgehalt beispielsweise des Persischen Golfs mittelfristig erhöhen und damit den Betrieb der Anlagen zur Meerwasserentsalzung teurer machen. Ausserdem werden die empfindlichen biologischen Lebensräume gestört, wenn sich die Salzkonzentration ändert.

Entsalzungsanlagen mit Anlagen zur Salzproduktion zu kombinieren, um keinerlei Salzkonzentrat in das Meer zurückpumpen zu müssen, wird hier immer mehr als Lösung angesehen. Aber dieser Weg scheint nicht wirtschaftlich zu sein, da der Transportaufwand gross ist, um die so gewonnenen Salze geografisch gesehen an den richtigen Ort zu transportieren.

Ein weiterer Nachteil ist, dass Energie der größte Kostenfaktor bei der Gewinnung von Trinkwasser aus salzigem Meerwasser ist. Koppelt man die Anlage zur Energiegewinnung an ein herkömmliches Kraftwerk, so kann die erforderliche Energie durch das Kraftwerk geliefert werden. Leider entstehen im Kraftwerk aber umweltschädliche Stoffe, wie zum Beispiel CO₂, die mit dem Rauchgas in die Luft gelangen.

Im Folgenden wird das über 100 Jahre alte, so genannte Ammoniak-Soda-Verfahren (Solvay-Verfahren) erläutert, da dieses Verfahren gegenwärtig als nächstliegender Stand der Technik für die vorliegende Erfindung angesehen wird, obwohl die Aufgabenstellung der Erfindung eine andere ist, wie später erläutert wird. Bei dem Solvay-Verfahren geht man aus von den Rohstoffen Natriumchlorid (NaCl) und Kalk (CaCO₃). Als Hilfsstoff wird lediglich Ammoniak (NH₃) benötigt. Das Solvay-Verfahren verläuft über folgende Teilreaktionen (2) bis (5):

CaCO₃ → CaO+CO₂ (2)

2 NaCl + 2 CO₂+ 2 NH₃ + 2 H₂O → 2 NaHCO₃ + 2 NH₄Cl (3)

2 NaHCO₃ → Na₂CO₃ + H₂O + CO₂ (4)

CaO + 2 NH₄Cl → 2 NH₃ + CaCl₂ + H₂O (5)

CaCO₃ + 2 NaCl → CaCl₂ + Na₂CO₃ (6)

In Gleichung (6) ist die Gesamtreaktion zusammen gefasst.

Beim Solvay-Verfahren geht es um die industrielle Herstellung von Soda (Na₂CO₃). Es muss das für die Soda verbrauchte Kohlendioxid stets ersetzt werden. Zu diesem Zweck erhitzt man in Öfen Kalkstein (CaCO₃), der sich ab 900°C zu Calciumoxid (CaO) zersetzt. Bei diesem Prozess, der auch als Brennen von Kalk bezeichnet wird (siehe Gleichung (7)), wird CO₂ frei, das wiederum bei der Herstellung von Soda verbraucht wird. Dieser Vorgang braucht sehr viel Energie.

178,44 kJ + CaCO₃ → CaO + CO₂ (7)

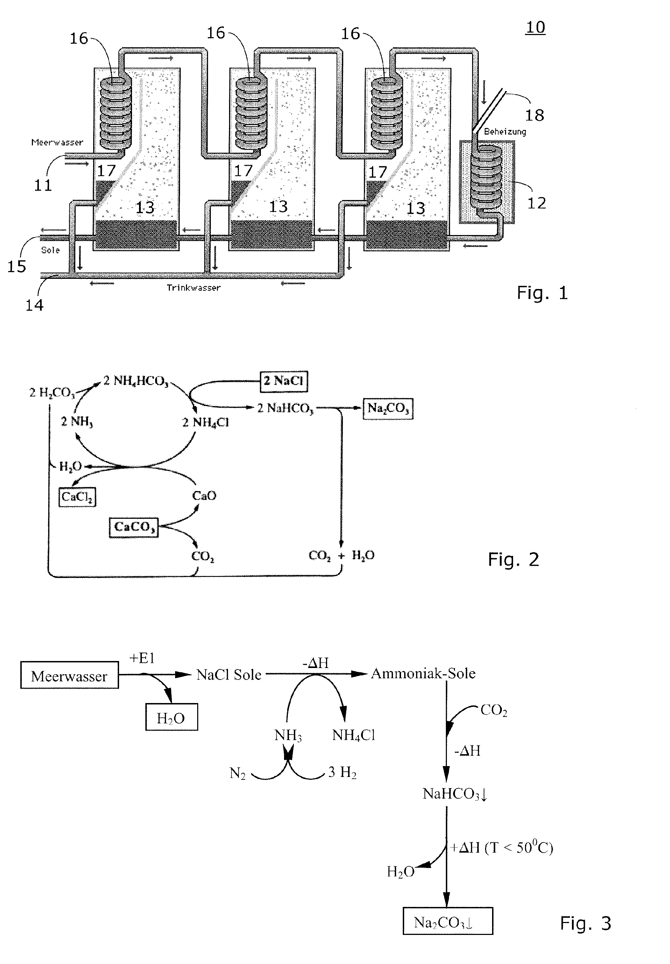

Eine Übersicht des Verfahrensablaufs ist in Fig. 2 dargestellt

Es wird neben der Energiebilanz als ein Nachteil des Solvay-Verfahrens angesehen, dass CO₂ aus Kalk freigesetzt wird, das bisher im Kalk fest gebunden war. Dieses CO₂, auch wenn es dann vorübergehend in Form von Soda (Na₂CO₃) gebunden vorliegt, gelangt dann bei der Glasproduktion, oder bei anderen industriellen Prozessen, die Soda verwenden, in die Atmosphäre. Die CO₂-Bilanz des Sodaverfahrens ist daher relativ schlecht.

Soda wird neben der Glasherstellung (mit Siliziumdioxid) auch in vielen anderen Bereichen verwendet und ist ein bedeutender Grundstoff. Für die Herstellung von Waschmitteln, Seifen und Nahrungsmitteln wird es ebenso verwendet wie für die Färberei und Bleicherei. Man findet Soda aber auch bei Farben, in Katalysatoren, Schädlingsbekämpfungs- und Düngemitteln, in Zellulose oder anderen Stoffen und zur Reduktion von Aluminiumoxid und Siliziumdioxid.

Es stellt sich nun die Aufgabe ein Verfahren und entsprechende Vorrichtungen bereit zu stellen, die so ausgelegt sind, dass Treibhausgase und andere Stoffe, die bisher als Abfallstoffe angesehen wurden, sinnvoll eingesetzt werden. Dabei soll es aber nicht nur um eine technisch aufwendige und teuere Reduktion der Treibhausgase gehen, sondern es soll vielmehr ein Ansatz gefunden werden, der es ermöglicht diese Stoffe ökologisch und ökonomisch sinnvoll und schonend einzusetzen.

Vorzugsweise sollen die Verfahren und entsprechende Vorrichtungen so angelegt werden, dass sie energetisch besonders günstig ablaufen, was einen direkten Einfluss auf die Gesamtbilanz hat. Ausserdem sollen die Verfahren und entsprechende Vorrichtungen eine breite Akzeptanz finden, um eine weltweite technische Umsetzung auf breiter Basis zu ermöglichen. Dabei soll stets die Gesamtbilanz Berücksichtigung finden, indem komplette Kreisläufe definiert werden.

In den Zeichnungen sind verschiedene Aspekte der Erfindung schematisch dargestellt, wobei die Zeichnungen zeigen:
- Fig. 1:: ein Schema einer konventionellen Meerwasserentsalzungsanlage, die im Zusammenhang mit der vorliegenden Erfindung eingesetzt werden kann;
- Fig. 2:: zeigt schematisch das bekannte Solvay-Verfahren;
- Fig. 3:: zeigt schematisch das erfindungsgemässe Verfahren in einer ersten Ausführungsform;
- Fig. 4:: zeigt schematisch eine Teilvorrichtung, die im erfindungsgemässen Verfahren eingesetzt werden kann;
- Fig. 5:: zeigt schematisch eine weitere Teilvorrichtung, die im erfindungsgemässen Verfahren eingesetzt werden kann;
- Fig. 6:: zeigt schematisch zwei weitere Teilvorrichtungen, die im erfindungsgemässen Verfahren eingesetzt werden können;
- Fig. 7:: zeigt schematisch eine erfindungsgemässe Gesamtanlage, die dazu ausgelegt ist das erfindungsgemässe Verfahren auszuführen, in blockartiger Darstellung;
- Fig. 8:: zeigt schematisch eine mögliche Ausführungsform einer Biogasanlage, in blockartiger Darstellung, die als Teil einer erfindungsgemässen Gesamtanlage eingesetzt werden kann.

Das erfindungsgemässe Verfahren basiert auf einem neuartigen Konzept, welches unter Verwendung vorhandener Ausgangsstoffe das CO₂ in Natriumhydrogencarbonat (NaHCO₃) oder in Soda bindet.

Bei dieser Umsetzung/Verwertung von CO₂ werden grossen Mengen von Meerwasser eingesetzt, um daraus Süsswasser herzustellen. Dieses Süsswasser kann z.B. besonders vorteilhaft eingesetzt werden, um
- Land- oder Viehwirtschaft zu beliefern, deren Abfälle (Dung, Kot, Futterreste) gemäss Erfindung in einer Biogasanlage weiter verwertet werden;
- Anpflanzungen zu bewässern, die wiederum verwertbare, erneuerbare Biomasse liefern, die gemäss Erfindung in einer Biogasanlage weiter verwertet werden kann.

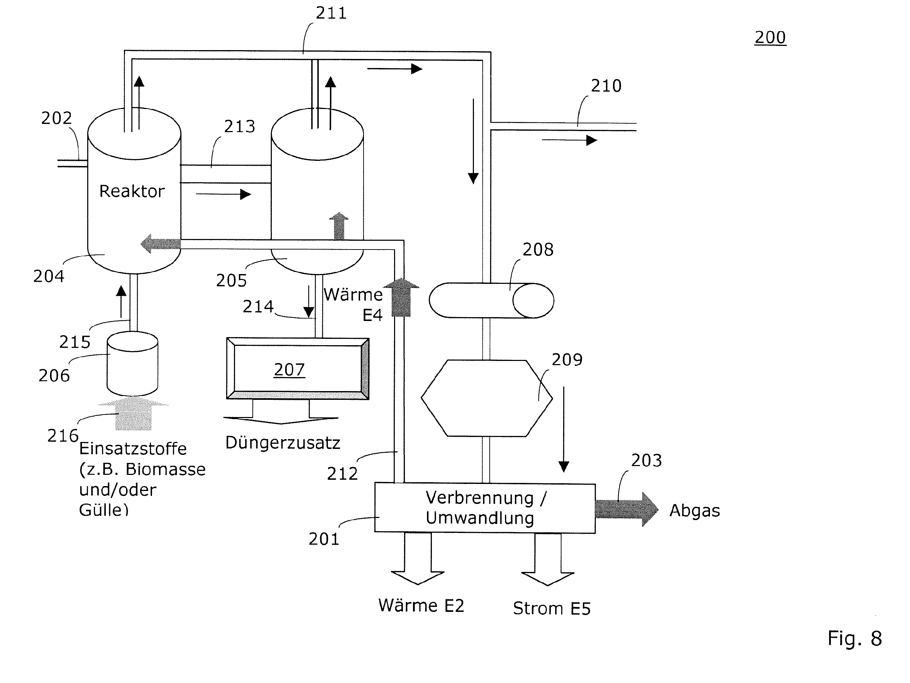

Gemäss Erfindung wird eine Biogasanlage eingesetzt, um vor Ort vorhandene organische Stoffe (im Folgenden als Einsatzstoffe bezeichnet) bei anaerober (sauerstofffreier) Vergärung zu Methan umzusetzen. Eine entsprechende Biogasanlage 200 ist in Fig. 8 schematisch dargestellt. Es kommt eine Biogasanlage 200 zum Einsatz, die aus den (lokal) verfügbaren Einsatzstoffen Biogas erzeugt. Das Biogas wiederum wird mindestens zum Teil vor Ort eingesetzt, um Strom E5 und (Ab-)Wärme E2, E5 zu erzeugen, wie in Fig. 8 durch den Funktionsblock 201 dargestellt. Die (Ab-)Wärme wird im Zusammenhang mit der Meerwasserentsalzung vor Ort eingesetzt. Auch ein Teil des erzeugten Stroms E5 kann lokal weiterverwendet werden.

Im Folgenden werden nun die einzelnen Ausgangsstoffe, Einsatzstoffe und die Produkte besprochen, die gemäss Erfindung zu Einsatz kommen, oder die im Rahmen der entsprechenden Verfahren entstehen können.

### Einsatzstoffe:

Gemäss Erfindung kommen vorzugsweise eine oder mehrere der folgenden organischen Stoffe/Materialien zu Einsatz, die als Einsatzstoffe bezeichnet werden:
- Reststoffe wie Klärschlamm, Bioabfall, Speise- oder Futterreste,
- Reste oder Abfälle aus Vieh- und Landwirtschaft, wie z.B. (Schweine-)Gülle, (Kuh-)Mist, (Kamel-)Dung, usw.,
- gezielt angebaute Energiepflanzen (oft als nachwachsende Rohstoffe bezeichnet). Hier können zum Beispiel Pflanzen oder Pflanzenteile eingesetzt werden, die aus Anpflanzungen stammen, die vor Ort mit dem Süsswasser und Dünger gezüchtet werden, das von der erfindungsgemässen Anlage bereit gestellt wird.
- Holz oder Holzabfälle,
- Seegras, Algen und andere Meerespflanzen.

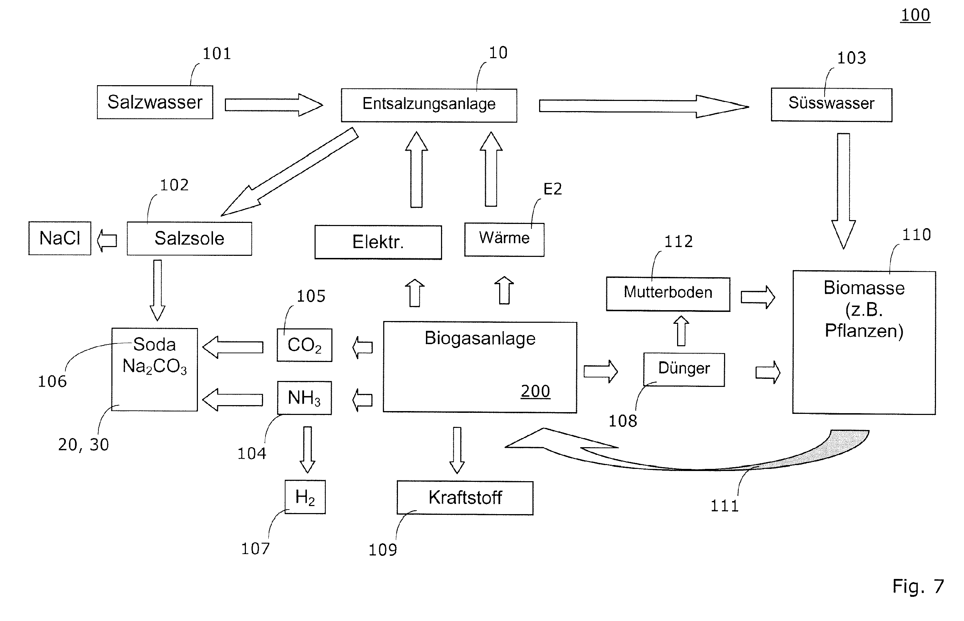

Die erfindungsgemässen Gesamtabläufe sind blockartig in Fig. 7 dargestellt. In den folgenden Absätzen wird mit Bezugszeichen auf diese Fig. 7 Bezug genommen.

### Meerwasser:

Gemäss Erfindung kommt vorzugsweise Meerwasser (Salzwasser 101) zum Einsatz, um daraus eine konzentrierte wäßrige Natriumchloridlösung zu erzeugen. Die aus dem Meerwasser erzeugte konzentrierte wäßrige Natriumchloridlösung wird hier vereinfachend als konzentrierte Salzsole 102 bezeichnet.

Vorzugsweise wird diese konzentrierte Salzsole 102 (vorzugsweise eine gesättigte oder nahezu gesättigte Sole) durch ein Verdampfungsverfahren (thermisches Destillationsverfahren) erzeugt. Besonders bewährt hat sich die mehrstufige Entspannungsverdampfung. Eine entsprechende Anlage 10 ist in Fig. 1 gezeigt.

Die konzentrierte Salzsole 102 hat vorzugsweise eine Salinität, die grösser ist als 200 g/l, und vorzugsweise grösser ist als 300 g/l. Es ist besonders vorteilhaft den Gesamtsalzgehalt (Salinität) der konzentrierten Salzsole 102 durch eine Leitfähigkeitsmessung zu überwachen. Der Gesamtsalzgehalt kann auch durch Messung des pH-Werts überwacht und der gesamte Prozess dadurch gesteuert werden.

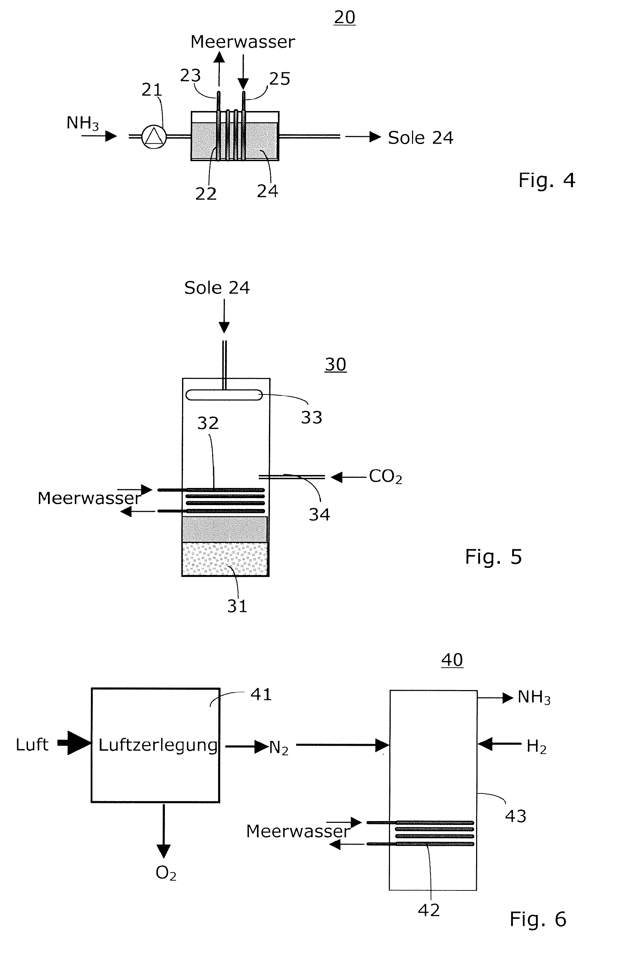

Die mehrstufige Entspannungsverdampfung (MSF - multistage flash evaporation) beruht auf der Verdampfung und nachfolgenden Kondensation des entstandenen Dampfes. Bei diesem Verfahren erhitzt man das Meerwasser (Salzwasser 101), das durch eine Leitung 11 zugeführt wurde, in einem Heizbereich 12. Vorher jedoch läuft das Meerwasser durch mehrere Kühlschleifen 16. Dort wird das Meerwasser eingesetzt, um den Wasserdampf in Niederdrucktanks 13 zu kühlen, damit der Wasserdampf dort auskondensiert. Nach dem Erhitzen im Heizbereich 12 auf Temperaturen über 100°C wird dann das erwärmte Meerwasser in Niederdrucktanks 13 geleitet. Durch den geringen Druck entspannt sich das Wasser und verdampft dort. Dieser Dampf kondensiert danach an der entsprechenden Kühlschleife 16 und man erhält reines Wasser (hier als Süsswasser 103 bezeichnet) in einem Bereich 17. Dieses Wasser 103 kann durch eine Leitung 14 (cf. Fig. 4) entnommen werden. Die konzentrierte Salzsole 102 (Nacl-Sole) wird durch eine Leitung 15 entnommen.

Das Süsswasser 103 kann unter anderem in der Biogasanlage 200 eingesetzt werden, da die bakteriellen Umsetzungsprozesse besonders gut ablaufen, wenn dem/den Einsatzstoff/en ein Wasseranteil beigemengt wird. Ein entsprechender Süsswasserzulauf 202 ist in Fig. 8 angedeutet. Dieser Süsswasserzulauf 202 ist optional.

Sogenannte Multi-Effekt-Destillation (MED - multiple effect distillation) Systeme arbeiten bei Temperaturen von 63 - 80°C. Dabei wird das Meerwasser wiederholt (8 - 16 mal) über Wärmetauscherröhren versprüht und unter Rückführung der Kondensationswärme verdampft, bis alle flüchtigen Substanzen entwichen sind.

Statt eines thermischen Verfahrens, kann aber auch ein Filterverfahren eingesetzt werden, das zum Beispiel auf einer umgekehrten Osmose beruht.

Dabei kommt einfach ausgedrückt eine Membran zum Einsatz, die eine konzentrierte und eine verdünnte Lösung voneinander trennt.

Bevorzugt wird eine Lösung, die ein mehrstufiges Entspannungsverfahren mit einem Filterverfahren kombiniert.

Es gibt mittlerweile Geräte und Anlagen, die zwischen 3 und 10 kWh (entspricht zwischen 10,8 MJ und 36 MJ) Energie pro m³ Meerwasser verbrauchen (z.B. Umkehrosmose-Anlagen). Diese Energie wird bei Umkehrosmose-Anlagen in Form von Strom verbraucht. Bei den thermischen Destillationsverfahren liegt der Energieverbrauch zwischen 3 und 6 kWh Strom (entspricht zwischen 10,8 MJ und 21,6 MJ) und ca. 230 MJ Wärmeenergie pro m³ Meerwasser bei einer MSF Anlage und zwischen 2 und 4 kWh Strom (entspricht zwischen 7,2 MJ und 14,4 MJ) und ca. 200 MJ Wärmeenergie pro m³ Meerwasser bei einer MED Anlage.

Gemäss Erfindung wird die Energiemenge E1, die benötig wird, um das mehrstufige Entspannungsverfahren zu betreiben, mindestens teilweise aus einem Kraftwerks- oder Biogasverstromungsprozess 200 bereit gestellt. Der entsprechende Energieanteil wird hier mit E2 bezeichnet. Wird die gesamte Energiemenge E1 von einem Kraftwerks- oder Biogasverstromungsprozess bereit gestellt, dann gilt E2 = E1.

Falls die Energiemenge E2 nicht ausreicht, um die Meerwasserentsalzung durchzuführen, dann kann ein weiterer Energieanteil E3 aus kaskadiert ablaufenden chemischen Prozessen stammen, die im Folgenden näher erläutert werden. Diese chemischen Prozesse nutzen die NaCl-Sole, die aus dem Meerwasser bereit gestellt wurde.

Die erfindungsgemässen Prozesse basieren auf einem ähnlichen Ansatz wie das eingangs beschriebene Solvay-Verfahren. Dieses Solvay-Verfahren ist in Fig. 2 schematisch dargestellt.

Das grundlegende Schema eines ersten erfindungsgemässen Prozesses ist in Fig. 3 gezeigt. Sowohl in Fig. 2 als auch in Fig. 3 sind die Edukte (Ausgangsstoffe) als auch die Produkte mit Umrandung dargestellt, während Zwischenprodukte ohne Umrandung gezeigt sind.

Man geht, wie bereits beschrieben, beim erfindungsgemässen Verfahren von Meerwasser (Salzwasser 101) aus, das umgewandelt wird in Süsswasser 103 (H₂O) und Nacl-Sole 102 (siehe Fig. 3 und Fig. 7).

### Einleiten von Ammoniak (NH₃):

Nachdem aus dem Meerwasser die NaCl-Sole 102 erzeugt wurde und das Süsswasser 103 (H₂O) einer anderen Verwendung zugeführt wurde, wie bereits angedeutet wurde, kommt nun Ammoniak 104 (NH₃) zum Einsatz.

Gemäss Erfindung wird, ausgehend von der NaCl-Sole 102, in einem nachgeschalteten Verfahren eine ammoniakhaltige Sole (auch Ammoniak-Sole genannt) erzeugt. Dies geschieht durch das Einleiten von Ammoniak 104 in die konzentrierte Salzsole 102 (NaCl-Sole).

Vorzugsweise wird dieser Vorgang, auch Absorption des Ammoniaks 104 in der Sole 102 genannt, in einer sogenannten Sättigungsapparatur 20 durchgeführt. Dieser Schritt ist exotherm, d.h. es wird Energie frei. In Fig. 3 ist daher neben diesem Schritt ein -ΔH gezeigt.

Eine entsprechende Sättigungsapparatur 20 ist stark vereinfacht in Fig. 4 gezeigt. Mittels einer Pumpe 21 (z.B. einer Vakuumpumpe) wird das Ammoniak 104 durch die Sättigungsapparatur 20 gepumpt oder gesaugt und wird entsprechend gekühlt. Vorzugsweise benutzt man hier einen Röhrenkühler 22 mit Rohren, die von kaltem Wasser durchflossen werden.

In einer gegenwärtig bevorzugten Ausführungsform der Erfindung, wird das Meerwasser, zum Beispiel direkt nach der Entnahme aus dem Meer, durch diese Rohre des Röhrenkühlers 22 geführt, wie in Fig. 4 angedeutet. Durch diese Massnahme werden zwei Vorteile erzielt: 1. wird das Meerwasser vorgeheizt, was die Energiebedarf für das Bereitstellen der Sole reduziert (falls ein thermisches Destillationsverfahren eingesetzt wird), da das Meerwasser bereits eine erhöhte Temperatur aufweist; 2. erfolgt eine Kühlung der ammoniakhaltigen Sole 24, was es ermöglicht anschliessend deutlich mehr CO₂ in dieser Sole 24 zu lösen. Das Meerwasser hat, nach dem Durchlaufen des Röhrenkühlers 22 auf der Ausgangsseite 23 eine höhere Temperatur als auf der Eingangsseite 25. Es wird also Wärmeenergie, hier als E3* bezeichnet, an das Meerwasser übergeben. Diese Energie E3* kann ein erster Anteil des weiteren Energieanteils E3 sein, der für das thermische Destillationsverfahren zur Bereitstellung der Nacl-Sole benötigt wird, falls E2 < E1 ist (d.h. falls die Biogasanlage 200 nicht genügend Wärme E2, E4 oder Strom E5 zur Verfügung stellt für die Meerwasserentsalzung).

In der Sättigungsapparatur 20 kondensiert Wasserdampf durch Absorption, wodurch sich die Lösung verdünnt. Deshalb fällt das Natriumchlorid der Sole 24 trotz entsprechender Abnahme der Löslichkeit beim Einleiten des Ammoniaks nicht aus.

Um in einer bevorzugten Ausführungsform den Energiebedarf E1 für das Bereitstellen der Sole zu reduzieren, kann die Ausgangsseite 23 des Röhrenkühlers 22 zum Beispiel direkt mit der Eingangsseite 11 der Vorrichtung 10 verbunden werden. Alternativ kann der Röhrenkühler 22 von einem Wärmetransfermedium durchströmt werden, das Wärme durch Röhren zu der Beheizung 12 transportiert, um hier das Erhitzen des Meerwassers zu unterstützen. In diesem Fall wird der Röhrenkühler 22 nicht vom Meerwasser durchströmt.

Nun wird CO₂ 105 in die ammoniakhaltige Sole 24 eingebracht. Dies kann geschehen, indem die ammoniakhaltige Sole 24 von oben in eine Vorrichtung 30 (z.B. in Form eines Füllturms) geleitet wird, während gleichzeitig von unten CO₂ hineingepumpt wird (siehe Fig. 5). Vorzugsweise wird die ammoniakhaltige Sole 24 durch einen Verteilkopf 33 oder durch Einspritzdüsen in die Vorrichtung 30 eingebracht.

Auch dieser Prozess ist exotherm und unter Wärmeentwicklung fällt das Natriumhydrogencarbonat (NaHCO₃) 31 aus. In Fig. 5 ist das Natriumhydrogencarbonat (NaHCO₃) 31 stark schematisiert im unteren Bereich der Vorrichtung 30 gezeigt.

Das CO₂ 105 stammt vorzugsweise aus Abgasen 203 des Kraftwerks- oder Biogasprozesses 200. Das CO₂ 105, das die kombinierte Süßwasser-Biogasanlage 100 (siehe Fig. 7) liefert, ist chemisch rein und kann als Produkt für die chemische Industrie verkauft werden (z.B. für die Produktion von Polycarbonat).

Die Verwendung/Speicherung des CO₂ 105 in Form von Soda 106, oder in Natriumhydrogencarbonat (NaHCO₃) als einem Vorprodukt von Soda, wird hier als 1. CO₂-Bindungsmöglichkeit bezeichnet. Die entsprechenden Verfahrensschritte können zum Beispiel in den Vorrichtungen 30, 40 ablaufen.

Da die Löslichkeit von CO₂ 105 in der ammoniakhaltigen Sole 24 mit steigender Temperatur abnimmt, sollten Kühleinrichtungen 32 eingesetzt werden, um die bei der exothermen Reaktion entstehende Wärme abzuführen. Diese Wärmeenergie wird als E3** bezeichnet. E3** kann wiederum ein Anteil von E3 darstellen.

Auch diese Kühleinrichtung 32 kann wiederum mit Meerwasser gekühlt werden, wie in Fig. 5 angedeutet. Damit wird das Meerwasser (weiter) vorgeheizt, bevor es in der Beheizung 12 endgültig auf eine Temperatur über 100°C gebracht wird. Alternativ kann die Kühleinrichtung 32 von einem Wärmetransfermedium durchströmt werden, das Wärme durch Röhren zu der Beheizung 12 transportiert, um hier das Erhitzen des Meerwassers zu unterstützen. In diesem Fall wird die Kühleinrichtung 32 nicht vom Meerwasser durchströmt.

Vorzugsweise werden die Kühleinrichtungen 22 und 32 in Reihe geschaltet und nacheinander von Meerwasser durchströmt, bevor dann das erwärmte Meerwasser über die Eingangsseite 11 in die Vorrichtung 10 gelangt. Die Biogasanlage 200 kann auch in diese "Reihenschaltung" integriert werden. Konkret wird dabei das Meerwasser vorzugsweise durch Leitungen geführt, die einen Gasmotor oder Generator 201 der Biogasanlage 200 umgeben. Dadurch wird die (Ab)Wärme E2, die beim Verbrennen des Biogases (Methan) entsteht, zum grossen Teil sinnvoll eingesetzt.

Falls das Meerwasser durch die Abwärme E3* und E3** der exothermen Prozessschritte vorgewärmt wird, nimmt die Kühlleistung der Kühlschleifen 16 ab. Diese Kühlschleifen 16 arbeiten am besten bei Meerwassertemperaturen, die unter 50°C und vorzugsweise unter 30°C liegen. Daher kann in einer alternativen Ausführungsform das durch die Abwärme E3* und E3** vorgewärmte Wasser direkt über eine Bypass-Leitung 18 in die Heizung 12 geleitet werden, während kühleres Meerwasser durch die Kühlschleifen 16 geführt wird. Die Bypass-Leitung 18 ist in Fig. 1 ansatzweise angedeutet. Das kühlere Meerwasser wird bei dieser Ausführungsform mit dem vorgewärmten Meerwasser gemischt und dann auf über 100°C gebracht, bevor es dann in die Niederdrucktanks 13 gelangt.

Alternativ kann das Meerwasser nach der Entnahme aus dem Meer durch parallel angeordnete Leitungssysteme geführt werden, wobei eines der Leitungssysteme (Ab)Wärme E2 der Biogasanlage 200 und eines des Leitungssysteme (Ab)Wärme aus den exothermen Prozessschritten übernimmt.

Gemäss Erfindung kommt Ammoniak 104 zum Einsatz, wie erwähnt. Es gibt verschiedene Wege, um das Ammoniak 104 bereit zu stellen. Besonders bevorzugt sind die folgenden Ansätze.

Das Ammoniak 104 kann entweder ein Einsatzstoff sein, der aus der Vieh- oder Landwirtschaft gewonnen wird (z.B. aus (Schweine)Gülle, oder Ammoniak 104 kann aus der Biogasanlage 200 gewonnen werden. Alternativ kann Ammoniak 104 auch zugeliefert werden.

### Natriumhydrogencarbonat (NaHCO₃):

Das Natriumhydrogencarbonat (NaHCO₃) kann gelagert werden, um das CO₂ dauerhaft zu binden. Natriumhydrogencarbonat kann aber auch in chemischen Prozessen eingesetzt werden, bei denen möglichst kein CO₂ entsteht, oder bei denen das frei werdende CO₂ eingefangen und erneut "verwertet" wird.

Aus diesem Grunde ist es besonders bevorzugt die Anlagen zur Weiterverarbeitung und Verwertung des Natriumhydrogencarbonats direkt in der Nähe der erfindungsgemässen Anlage 100 aufzustellen.

### Natriumcarbonat (NaCO₃/ Soda):

Das Natriumhydrogencarbonat (NaHCO₃) kann durch langsames Erwärmen getrocknet und damit als Pulver (calziniertes Soda 106 = wasserfreies Natriumcarbonat: Na₂CO₃) bereitgestellt werden. Dieser Vorgang ist in Fig. 3 schematisch angedeutet. Vorzugsweise wird das beim Erwärmen entstehende Süsswasser auffangen. Das Erwärmen geschieht vorzugsweise bei einer Temperatur T<=50°C, um die Freisetzung von CO₂ ganz zu verhindern, oder um die freigesetzte CO₂ Menge zu reduzieren.

Das Natriumcarbonat 106 kann gelagert werden, um das CO₂ dauerhaft zu binden. Kalzinierte Soda (wasserfreies Na₂CO₃) kann in trockenen Räumen oder in Wüstenregionen relativ problemlos gelagert werden. Falls sie mit Feuchtigkeit in Verbindung kommt, so entsteht durch Aufnahme von Wasser das Monohydrat Na₂CO₃ * H₂O. Das CO₂ bleibt dabei aber weiterhin gebunden.

Natriumcarbonat 106 kann aber auch in chemischen Prozessen eingesetzt werden, bei denen möglichst kein CO₂ entsteht, oder bei denen das frei werdende CO₂ eingefangen und erneut "verwertet" wird.

Aus diesem Grunde ist es besonders bevorzugt die Anlagen zur Weiterverarbeitung und Verwertung des Sodas 106 (z.B. eine Glashütte oder Anlagen zur Aluminiumherstellung) direkt in der Nähe der erfindungsgemässen Anlage 100 aufzustellen.

### Gewinnung von Ammoniak NH₃ nach dem Haber-Bosch-Verfahren:

Ammoniak 104 kann durch direkte Vereinigung von Stickstoff und Wasserstoff nach Gleichung (8) hergestellt werden:

N₂ + 3 H₂ ←→ 2 NH₃ + 92 kJ mol⁻¹ (8)

Dieser Ansatz ist in Fig. 3 schematisch angedeutet. Die Ammoniaksynthese nach Gleichung (8) ist exotherm (Reaktionsenthalpie - 92.28 kJ/mol). Es handelt sich um eine Gleichgewichtsreaktion, die unter Volumenverminderung verläuft. Der Stickstoff kann zu Beispiel nach dem Linde-Verfahren bereit gestellt werden, bei dem aus der Umgebungsluft einerseits der Sauerstoff und andererseits der Stickstoff abgetrennt wird, wie in Fig. 6 schematisch durch den Verfahrensblock 41 dargestellt. Der Verfahrensblock 41 kann Teil einer Anlage 40 sein, die zum Bereitstellen des Ammoniaks 104 ausgelegt ist.

Besonders vorteilhaft ist aber die Bereitstellung von Ammoniak 104 durch die Biogasanlage 200, wie in Fig. 7 angedeutet.

Der Wasserstoff kann zum Beispiel auf konventionellem Wege aus Methan erzeugt werden. Dieses Methan kann aus einem Pyrolyseverfahren erzeugt werden, oder das Methan kann aus Ammoniumchlorid (NH₄Cl) und z.B. Methan erzeugt werden. Dieses NH₄Cl entsteht in dem erfindungsgemässen Verfahren als (Zwischen)Produkt, wie in Fig. 3 angedeutet (NH₄Cl ist eine weiteres Solvayausgangsprodukt). Man kann aber auch NH₄Cl einsetzen, um weiteres CO₂ zu binden. NH₄Cl kann aber auch zur Düngerherstellung eingesetzt werden, wie weiter unten beschrieben.

Besonders bevorzugt ist die Herstellung von Biowasserstoff 107 aus Methan. Dies kann mit einem Dampfreformierungsverfahren gemacht werden, das in Gleichung (9) zusammenfassend dargestellt ist:

CH₄ + H₂O → CO + 3 H₂ (9)

Es entsteht bei diesem Dampfreformierungsverfahren neben dem Biowasserstoff 107 auch Kohlenmonoxid CO. Das durch unvollständige Umsetzung erzeugte Kohlenmonoxid kann z.B. noch mit Hilfe der Wassergas-Shift-Reaktion an einem Eisen(III)-oxidkatalysator zu Kohlendioxid und Wasserstoff umgesetzt werden. Das Kohlendioxid kann gemäss Erfindung im modifizierten Solvay-Verfahren in Form von Soda 106 gebunden werden.

Da die NH₃-Synthese nach (8) exotherm ist und unter Volumenverminderung abläuft, besteht eine Abhängigkeit der Ausbeute an NH₃ von Druck und Temperatur. Die exotherme Reaktion (8) verschiebt sich mit steigender Temperatur auf die Seite der Ausgangsprodukte, d. h. bei hoher Temperatur ist die Ausbeute an NH₃ geringer. Reaktionen mit Volumenabnahme verlagern sich bei Drucksteigerung auf die Seite der Endprodukte, d. h. hier zu höheren Ausbeuten an NH₃. Daher wird gemäss Erfindung vorzugsweise die NH₃-Synthese in einem NH₃-Synthese-Reaktor, z.B. in Form eines gekühlten Druckgefässes 43, durchgeführt. Besonders bevorzugt ist im vorliegenden Zusammenhang wiederum eine Kühlung mittels Meerwasser. Es kann auch hier eine Kühleinrichtung 42 eingesetzt werden, die wiederum Teil einer Reihenschaltung von meerwassergekühlten Kühleinrichtungen 22, 32 und 42 ist.

Die NH₃-Synthese nach (8) kann einen Teil der Energie zur Verfügung stellen, die für das Betreiben des thermischen Destillationsverfahrens zur Bereitstellung der NaCl-Sole 102 benötigt wird. Dieser Energiebeitrag wird als E3*** bezeichnet.

Alternativ kann auch hier eine Kühlung mit einem Wärmetransfermedium vorgenommen werden, wie weiter oben beschrieben, um die Energie E3*** zu der Heizung 12 zu fördern.

Falls gewünscht, kann bei Bedarf aus dem Ammoniak 104 auch Harnstoff nach folgender Gleichung (10) hergestellt werden. Harnstoff ist eine weitere Möglichkeit, um CO₂ zu binden (hier als 2. CO₂-Bindungsmöglichkeit bezeichnet):

2 NH₃ + CO₂ → (NH₂)2CO + H₂O (10)

Dieses Verfahren (10) kann eingesetzt werden, falls man zum Beispiel in einem parallel ablaufenden Kraftwerks- oder Biogasprozess Harnstoff braucht, um Russpartikel oder andere Schadstoffe aus den Abgasen 203 (Rauchgas) zu entfernen.

Der Harnstoff kann aber auch als Energiespeicher eingesetzt werden, da sich Harnstoff gut und problemlos speichern und/oder transportieren lässt. Der Harnstoff kann auch als Düngerrohstoff dienen. Die Umsetzung zu Dünger 108 ist besonders bevorzugt, da der Dünger 108 vor Ort zusammen mit dem Süsswasser 103 eingesetzt werden kann, um Land- oder Viehwirtschaft zu betreiben, oder um Anpflanzungen, Begrünungen zu bedienen, die dann wiederum verwendet werden können, um als Einsatzstoffe die Biogasanlage 200 zu beschicken.

### Ammoniumchlorid:

Ammoniumchlorid (NH₄Cl) entsteht in dem erfindungsgemässen Verfahren als (Zwischen)Produkt, wie in Fig. 3 angedeutet.

Ammoniumchlorid sublimiert beim Erhitzen und zerfällt ab 335°C vollständig in Ammoniak (NH₃) und Chlorwasserstoff (HCl), wie in Gleichung (11) gezeigt:

H₂O + 2 NH₄Cl → 2 NH₃ + HCl (11)

Dieser Prozess (11) kann genutzt werden, um Ammoniak (NH₃) (zurück) zu gewinnen. Chlorwasserstoff (HCl) ist ein wertvoller Rohstoff für viele industrielle Prozesse. Falls Natrium (Na) zur Hand ist, könnte optional wieder NaCl hergestellt werden.

Aus Ammoniumchlorid kann aber auch über folgenden optionalen Weg (12) Ammoniak (zurück)gewonnen werden. Auch bei diesem Prozess gewinnt man wieder NaCl:

NH₄Cl + NaOH -> NH₃ + NaCl + H₂O (12)

Verwendung findet Ammoniumchlorid heute unter anderem bei der Herstellung von Kältemischungen, in Färbereien und Gerbereien. Ebenfalls findet es Anwendung beim Verzinnen, Verzinken oder Löten, da es die Fähigkeit besitzt, mit Metalloxiden flüchtige Chloride zu bilden und somit die Metalloberfläche zu reinigen.

Aus dem Ammoniumchlorid kann aber auch Ammoniumsulfid (NH₄HSO₄) erzeugt werden, wie zum Beispiel in der Mexikanischen Patentschrift mit der Publikationsnummer MXNL03000042 und dem Titel "PROCESS FOR TRANSFORMING AN AMMONIUM CHLORIDE SOLUTION GENERATED BY THE SOLVAY PROCESS INTO AMMONIUM SULPHATE" beschrieben.

Das Ammoniumchlorid kann aber auch als Wasserstoffspeicher eingesetzt werden.

Aus dem Ammoniumchlorid kann man Wasserstoff abspalten und diesen Wasserstoff nach folgender Reaktionsgleichung (13) mit CO₂ zu Methan und Wasser umwandeln. Das Verfahren (13) läuft bei ca. 1250°C ab und ist exotherm (setzt Energie frei). Die entsprechende Energiemenge, die bei (13) frei wird, kann als Energiebeitrag E3**** im Verfahren zur Herstellung der NaCl-Sole 102 eingesetzt werden.

CO₂ + 3H₂ → CH₄ + H₂O (13)

Dieses Verfahren (13) ist gegenwärtig besonders bevorzugt, da einerseits CO₂ gebunden wird und andererseits Methan zur Verfügung gestellt werden kann. Diese Form der CO₂-Bindung wird hier als 3. CO₂-Bindungsmöglichkeit bezeichnet. Das Methan kann wieder verstromt werden, wobei die (Ab)Wärme dann in die Meerwasserentsalzung übernommen werden kann.

Gemäss Erfindung kann dieses Methan eingesetzt werden, um über Gasmotoren oder Generatoren 201 Strom E5 zu erzeugen.

Dass heisst, es ist möglich das Ammoniumchlorid als (Zwischen)Produkt für weitere wichtige Prozesse bereit zu stellen, oder das Ammoniumchlorid in entsprechende Produkte (z.B. Düngerzusatz) umzuwandeln.

### (Bio-)Gasanlage 200:

Fig. 8 zeigt schematisch eine mögliche Ausführungsform einer (Bio-)Gasanlage 200, in blockartiger Darstellung, die als Teil einer erfindungsgemässen Gesamtanlage 100 eingesetzt werden kann. Es werden der /die Einsatzstoffe 216 in einen Vorratsbehälter 206 (Tank, Bunker oder ähnliches) eingebracht. Das Einbringen ist in Fig. 8 durch die Referenznummer 204 gekennzeichnet. Eber eine Leitung oder Verbindung 215 gelangen die Einsatzstoffe 216 in einen Reaktor 204. In diesem Reaktor 204 findet entweder eine vollständige Umsetzung in Gas (vorzugsweise Biogas) statt, oder es wird, wie in Fig. 8 gezeigt, ein Nachgärbehälter 205 vorgesehen, der über eine Verbindung 213 mit Biogasgülle beschickt wird. Das (Bio-)Gas, das in dem Reaktor 204 und/oder Nachgärbehälter 205 entsteht, wird über Leitungen 211 gesammelt und weiter geleitet.

Im vorliegenden Beispiel wird das Gas in einen Gastank (Gaslager) 208 gespeichert, bevor es dann über einen optinalen Gaswäscher 209 einem Gasmotor oder Generator 201 zugeführt wird. Hier findet die Umsetzung respektive Verbrennung statt, die einerseits (Ab-)Wärme E2 erzeugt und andererseits Strom E5. Die Abgase 203 dieser Umsetzung / Verbrennung können CO₂ enthalten, das entweder im modifizierten Solvay-Verfahren nach Fig. 3 zu Flüssigkeit oder einem Feststoff (z.B. Soda 106) umgesetzt wird, oder das bei der Herstellung von Dünger mit negativem CO₂-Beitrag eingesetzt wird.

Es können optional auch Reststoffe (z.B. Gülle), die bei der Gewinnung von (Bio-)Gas entstehen über eine Verbindung 214 in ein Lager 207 übergeben werden. Diese Reststoffe können z.B. als Dünger oder Düngerzusatz eingesetzt werden.

Um die bakterielle (Bio-)Gasgewinnung in der Anlage 200 zu beschleunigen, kann ein kleiner Teil des entstehenden Süsswassers 103 über eine Leitung 202 in den Reaktor 204 gelangen. Je nach Aufbau der Anlagen 200, kann ein Teil der (Ab-)Wärme, hier mit E4 bezeichnet, über ein Leitungs- oder Wärmekopplungssystem 212 in den Reaktor 204 und/oder Nachgärbehälter 205 gelangen, um die richtigen Temperaturen für die (Bio-)Gaserzeugung zu gewährleisten.

Überschüssiges Gas (vorzugsweise Methan oder eine Gas mit miondestens 80% Methananteil) kann über eine Leitung 210 abgefackelt werden. Besser ist jedoch eine Umsetzung zu Biokraftstoff 109 oder eine Einleitung in ein Netzsystem. Besonders bevorzugt ist eine Gasanlage 200, die pyrolytisch arbeitet und dabei die Einsatzstoffe 110 in einer sauerstoffarmen oder sauerstofffreien Atmosphäre umsetzt. Eine solche Gasanlage 200 ist besonders gut zur Herstellung von Dünger 108 oder Düngerzusätzen geeignet, da der Reststoff, der nach der Pyrolyse entsteht, einen hohen Kohlenstoffanteil aufweist. Dieser Kohlenstoffanteil kann zu dem Dünger 108 umgesetzt werden.

### Methan:

Einerseits kann das Methan in einem Gasmotor oder Generator 201 eingesetzt werden, um Wärme E2, E4 und Strom E5 zu erzeugen.

Methan, das nicht unmittelbar gemäss Erfindung eingesetzt wird, kann auf tiefe Temperaturen gekühlt, stark komprimiert (auf über 200 bar) werden, um es dann in flüssiger Form sicher zu lagern und/oder transportieren. So kann man z.B. flüssiges Methan als Treibstoff 109 für Fahrzeuge in einer Anlage bereit stellen, die sich in der Nähe der Gesamtanlage 100 befindet.

Das Biogas kann nach entsprechender Verdichtung z.B. auch in ein (Erd-) Gasnetz eingespeist werden.

Zusammenfassend kann gesagt werden, dass Biogas einer der wenigen, wenn nicht gar der einzige erneuerbare Energieträger ist, der sich zur Erzeugung von Strom E5 und Wärme E2, E4, wie auch als Treibstoff 109 einsetzen lässt.

Das Methan kann aber auch zu längerkettigen Kohlenwasserstoffen umgesetzt werden.

### Kühlvorrichtungen:

Im vorliegenden Zusammenhang ist verschiedentlich von Kühlvorrichtungen die Rede. Es liegt auf der Hand, dass es verschiedene Wege gibt, um solche Kühlvorrichtungen zu realisieren.

### Süsswasser 103:

Ein weiterer wesentlicher Aspekt der Erfindung wird darin gesehen, dass beim Binden von CO₂ 105, das aus einem Verbrennungs-, Biogas- 200 oder anderem industriellen Prozess stammt, neben dem wertvollen Soda 106 auch Trinkwasser/Süsswasser 103 entsteht. Diese Wasser 103 ist quasi ein Abfallprodukt und kann für die Trinkwasserversorgung eingesetzt werden.

Wenn man weitere Massnahmen für eine echte CO₂-Reduktion ergreifen möchte, so kann das Wasser 103 für die Bewässerung von Bepflanzungen und Neuanpflanzungen eingesetzt werden, wie in Fig. 7 durch den Block 110 angedeutet. Dadurch wird "lebende Biomasse" geschaffen, die durch Photosynthese dazu beiträgt weiteres CO₂ zu binden. Damit entsteht ein eigentlicher "Lawineneffekt" durch das "Bewässern" z.B. von Wüstenflächen. Diese Form der CO₂-Bindung wird hier als 4. CO₂-Bindungsmöglichkeit bezeichnet.

Schnellwachsende Biomasse kann angepflanzt, aufgezogen und dann geerntet, gemäht, abgeholzt oder geschnitten werden. Die dadurch anfallenden Einsatzstoffe werden in die Biogasanlage 200 verbracht, wie beschrieben. In Fig. 7 ist das Einbringen der Einsatzstoffe durch den Pfeil 111 angedeutet.

### Dünger mit negativem CO₂-Beitrag:

Setzt man einen Bodendünger 108 mit einem negativen CO₂-Beitrag ein, so wird der erfindungsgemässe Ansatz noch günstiger was die Energie- und die CO₂-Gesamtbilanz anbelangt. Mit den Ausgangsstoffen (im Sinne von Produkten) der Biogasanlage 200: Methan CH₄, Ammoniak NH₃ und Holzkohle (Kohlenstoff mit hochporöser Oberfläche) sowie den organischen Resten der Biogasproduktion kann in vorteilhafter Weise ein Dünger 108 erzeugt werden, der auf Grund der Bindung von Ammoniak im Boden 112 einen negativen CO₂-Beitrag liefert (hier Holzkohlendünger 108 genannt).

Der Holzkohledünger 108 hat einen sehr vorteilhaften Einfluss auf die Bildung von Mikroorganismen im Mutterboden 112 (Krumme) und führt zu wesentlich aktiveren und dickeren Krumme (Boden mit schwarz/bräunlicher Färbung) mit verstärkter Bodenatmung (Bildung von bodennahem CO₂). Die Bodenatmung liefert im Wesentlichen das CO₂, das die Pflanze für die Photokatalyse benötigt. Die Folge ist ein beschleunigtes Pflanzenwachstum, die Verbreitung von Mikroorganismen und Kleinstlebewesen, was wichtig ist für einen dauerhaft gesunden und fruchtbaren Boden 112 und die verstärkte Bindung von CO₂. Ausserdem wird die Bodenerosion verringert. Zusätzlich wird der Einsatz von konventionellem Dünger mit negativer CO₂ Bilanz vermieden (CO₂ Bonus für Holzkohlendünger).

Falls Holzkohledünger als Dünger 108 eingesetzt wird, kann die Fruchtwechselfolge erhöht werden, oder die Ernteerträge durch schnelleres Wachstum werden deutlich besser. Durch den Zusatz von Holzkohlendünger 108 wird nicht nur die Anzahl der nützlichen Mikroorganismen im Boden 112 besser, sondern der Boden 112 ist auch geeignet mehr Wasser aufzunehmen und zu speichern. Ausserdem nehmen die Pflanzen deutlich mehr Stickstoffe auf.

Besonders bevorzugt ist die Umsetzung von Kohlendioxid mit Ammoniak und Wasser zu Am-Bi-Carb (siehe auch Oak Ridge National Laboratory US Patent 6,447,437).

Besonders bevorzugt ist die Einbringung von Holzkohlendünger 108 als Pulver oder Granulat in die zu düngenden Böden.

Der erfindungsgemässe Dünger 108 ist besonders gut zur Verwendung durch Biobauern geeignet, da er eine sehr viel bessere CO₂-Bilanz, nämlich eine negative Bilanz, hat als andere Dünger, die typischerweise zum Einsatz kommen.

Besonders eignet sich eine Kombination aus Holzkohle mit Ammonium-basierten Düngerzusätzen (z.B. Ammoniumnitrat; NH₄NO₃). Diese Düngerzusätze können zum Beispiel aus dem Ammoniumchlorid gewonnen werden, das je nach Ablauf des erfindungsgemässen Verfahrens anfällt.

Auch geeignet sind die folgenden Ammonium-basierten Zusätze Ammoniumhydrogencarbonat NH₄HCO₃ und/oder Ammoniumcarbonat (NH₄)₂CO₃. Auch diese Zusätze können problemlos aus den Stoffen hergestellt werden, die in der kombinierten Süsswasser-Biogasanlage 100 anfallen.

Das erfindungsgemässe Verfahren zum Bereitstellen von Energie und Binden von gasförmigem CO₂, umfasst zusammenfassend die folgenden wesentlichen Schritte:
a. Bereitstellen 111, 216 eines Einsatzstoffes 110,
b. Umsetzung des Einsatzstoffes 110 in einer Gasanlage 200 in ein (Bio-)Gas (vorzugsweise ein Gas, das mehr als 80 % Methan enthält),
c. Umwandeln des Gases in Primärenergie (Wärmeenergie E2, E4 und Stromenergie E5),
d. Bereitstellen von salzhaltigem Wasser 101, vorzugsweise Meerwasser,
e. Erzeugen einer konzentrierte Salzsole 102 mit erhöhter Salzkonzentration aus dem salzhaltigen Wasser 101, unter Zufuhr mindestens eines Teils der Wärme- E2 oder Stromenergie E5,
f. Bereitstellen von Ammoniak (NH₃) 104,
g. Bereitstellen von gasförmigem CO₂ 105 aus einem anderen Prozessablauf (z.B. aus der Gasanlage 200),
h. in die konzentrierte Salzsole 102 Einleiten des Ammoniaks (NH₃) 104, um eine ammoniakhaltige Sole zu erhalten, und Einleiten des CO₂ 105, um das CO₂in einer Flüssigkeit oder einem Feststoff 106 zu binden,
i. Bereitstellen von Süsswasser 103, das beim Erhitzen des salzhaltigen Wassers 101 entsteht.

Die Erfindung hat mehrere Vorteile, die vor allem aus der konsequenten und effizienten Verbindung mehrere Prozessabläufe entspringen. Die Einsatzstoffe, auch wenn Sie häufig als Abfallstoffe angesehen werden, werden eingesetzt, um in besonders effizienter Form mittels Biogasanlage(n) 200 Methan, oder ein Methan enthaltendes Gasgemisch, zu erzeugen.

Wirtschaftliche Gewinne werde dabei an mehreren Stellen des Verfahrens gemacht. Dabei steht nicht die reine Energiegewinnung (z.B. durch Verstromung des Biogases) im Vordergrund, sondern es werden auch andere Stoffe/Produkte erzeugt, die wertvoll sind. Der Begriff wertvoll wird hier bewusst verwendet, um die Stoffe/Produkte zu bezeichnen, die entweder aus ökologischer oder ökonomischer oder aus ökologischer und ökonomischer Sicht einen Wert haben.

Je nach Einsatz des erfindungsgemässen Verfahrens oder der entsprechenden Anlage(n) 100, kann eine neutrale oder sogar negative CO₂-Bilanz erzielt werden.

Die Erfindung stellt somit ein nachhaltiges System zur Verfügung, das für die Energieerzeugung, Land- und Viehwirtschaft und industriellen Erzeugung wichtiger Stoffe/Produkte geeignet ist. Bei konsequenter Auslegung ergibt sich ein geschlossener Kreislauf, der nicht die Umwelt belastet, sondern in verschiedener Hinsicht entlastet.

## Patentansprüche

1. Verfahren zum Bereitstellen von Energie und Binden von gasförmigem CO₂ (105), **gekennzeichnet durch** die folgenden Schritte:
a. Bereitstellen (111) eines Einsatzstoffes,
b. Umsetzung des Einsatzstoffes in einer Gasanlage (200) in ein Gas,
c. Umwandeln des Gases in Primärenergie (E2),
d. Bereitstellen von salzhaltigem Wasser (101), vorzugsweise Meerwasser,
e. Erzeugen einer konzentrierte Salzsole (102) mit erhöhter Salzkonzentration aus dem salzhaltigen Wasser (101), unter Zufuhr mindestens eines Teils der Primärenergie (E2),
f. Bereitstellen von Ammoniak (NH₃) (104),
g. Bereitstellen von gasförmigem CO₂ (105) aus einem anderen Prozessablauf,
h. in die konzentrierte Salzsole (102) Einleiten des Ammoniaks (NH₃) (104), um eine ammoniakhaltige Sole (24) zu erhalten, und Einleiten des CO₂ (105), um das CO₂in einer Flüssigkeit oder einem Feststoff (106) zu binden,
i. Bereitstellen von Süsswasser (103), das im Schritt e.) entsteht.

2. Verfahren nach Anspruch 1, wobei eine oder mehrere der folgenden Stoffe als Einsatzstoffe dienen:
- Reststoffe wie Klärschlamm, Bioabfall, Speise- oder Futterreste,
- Reste oder Abfälle aus Vieh- und Landwirtschaft, wie z.B. (Schweine-) Gülle, (Kuh-)Mist, (Kamel-)Dung, usw.,
- Energiepflanzen, vorzugsweise Pflanzen oder Pflanzenteile,
- Holz oder Holzabfälle,
- Seegras, Algen und andere Meerespflanzen.

3. Verfahren nach Anspruch 1 oder 2, wobei es sich bei der Gasanlage (200) um eine Biogasanlage handelt und es sich bei dem Gas um Biogas mit einem deutlichen Methananteil, vorzugsweise > 80% Methan, handelt.

4. Verfahren nach Anspruch 1 oder 2, wobei das Umwandeln des Gases in Primärenergie (E2, E4, E5) in einem Gasmotor (201) geschieht und sowohl Wärmeenergie (E2, E4) als auch Stromenergie (E5) durch den Gasmotor (201) bereit gestellt wird.

5. Verfahren nach Anspruch 5, wobei im Schritt e.) mindestens ein Teil der Primärenergie in Form von Wärmeenergie (E2) zugeführt wird, die von dem Gasmotor (201) bereit gestellt wird.

6. Verfahren nach einem der vorhergehenden Ansprüche, wobei das Ammoniak (NH₃) (104) aus
i. der Gasanlage (200), und/oder
ii. einer Haber/Bosch Anlage stammt.

7. Verfahren nach einem der vorhergehenden Ansprüche, wobei das CO₂ (105) einem der folgenden Prozessabläufe stammt:
i. Umsetzung des Einsatzstoffes in der Gasanlage (200), und/oder
ii. Umwandeln des Gases in Primärenergie (E2), und/oder
iii. einem Kraftwerksprozess.

8. Verfahren nach einem der vorhergehenden Ansprüche, wobei es sich bei dem Feststoff (106), der CO₂ (105) bindet um Natriumhydrogencarbonat (NaHC03) oder Soda (Na₂CO₃) handelt.

9. Verfahren nach Anspruch 8, wobei der Feststoff längerfristig gelagert wird.

10. Verfahren nach Anspruch 1, wobei im Schritt e.) die konzentrierte Salzsole (102) erzeugt wird durch:
- das Erhitzen des salzhaltigen Wassers (101) mit einem Wärmeanteil (E2) der Primärenergie, oder
- das Membranfiltern des Meerwasser mit einem Stromanteil der Primärenergie,
und wobei die konzentrierte Salzsole (102) ganz oder weitestgehend mit Salz gesättigt ist.

11. Verfahren nach einem der vorhergehenden Ansprüche, wobei die konzentrierte Salzsole (102) eine Salinität hat, die grösser ist als 200 g/l, und vorzugsweise grösser ist als 300 g/l.

12. Verfahren nach einem der vorhergehenden Ansprüche, wobei in einem weiteren Schritt Dünger (108) erzeugt wird, wobei es sich vorzugsweise um einen Dünger (108) handelt, der unter anderem Holzkohle enthält.

13. Verfahren nach einem der vorhergehenden Ansprüche, wobei die Zufuhr des mindestens eines Teils der Primärenergie in Schritt e.) durch eine Kopplung der Gasanlage (200) mit einer entsprechenden Meerwasserentsalzungsanlage (10) erfolgt, und wobei in der Meerwasserentsalzungsanlage (10) die Schritte e.) bis i.) durchgeführt werden.

14. Verfahren zur Erzeugung eines Düngers (108) mit negativem CO₂ Potential, **dadurch gekennzeichnet, dass** Produkte einer Biogasanlage (200) und Holzkohle zu einem Holzkohledünger (108) verarbeitet werden.

15. Verfahren nach Anspruch 15, wobei es sich bei den Produkten der Biogasanlage (200) um Methan, Ammoniak, organische Reste der Biogasproduktion und um Wärme handelt.

16. Verfahren nach Anspruch 15, wobei als ein Produkt der Biogasanlage (200) Kohlenstoff bereit gestellt wird.

17. Verfahren nach Anspruch 17, wobei aus dem Kohlenstoff ein kohlenstoffhaltiger Dünger erzeugt wird.

18. Verfahren nach Anspruch 17, wobei der Kohlenstoff mit Düngerzusätzen versetzt wird.

19. Vorrichtung (100) zum Bereitstellen von Energie und Binden von gasförmigem CO₂ (105) mit
- einer Gasanlage (200) zum Umsetzen eines Einsatzstoffes in ein Gas und zum Erzeugen von Primärenergie (E2),
- einer Entsalzungsanlage (10) zum Umsetzen von salzhaltigem Wasser (101), vorzugsweise Meerwasser, unter Energiezufuhr in Süsswasser (103) und in eine konzentrierte Salzsole (103) mit erhöhter Salzkonzentration, wobei die Entsalzungsanlage (10) mit der Gasanlage (200) gekoppelt ist, um einen Wärmeanteil (E2) der Primärenergie von der Gasanlage (200) an die Entsalzungsanlage (10) zu übergeben,
- einer Vorrichtung (20) zum Aufnehmen der konzentrierten Salzsole (103), die Mittel (21) zum Einleiten von Ammoniak (NH₃) (104) umfasst, um eine ammoniakhaltige Sole (24) erzeugen zu können,
- Mitteln (30, 33) zum Aufnehmen der ammoniakhaltigen Sole (24),
- Mitteln (34) zur Entnahme von CO₂ (105) aus der Gasanlage (200) oder einer anderen Prozessanlage oder Vorrichtung, und zum Einbringen des CO₂ (105) in die ammoniakhaltige Sole (24), und mit
- Mitteln (30) zum Binden des CO₂ (105) in einer Flüssigkeit oder einem Feststoff (106).

20. Vorrichtung (100) nach Anspruch 19, wobei die Entsalzungsanlage (10)
- eine mehrstufige Entspannungsverdampfungsvorrichtung (MSF - multistage flash evaporation), und/oder
- eine Multi-Effekt-Destillationsvorrichtung (MED - multiple effect distillation), und/oder
- eine Filtervorrichtung
umfasst.

21. Vorrichtung (100) nach Anspruch 19 oder 20, wobei es sich bei der Gasanlage (200) um eine Biogasanlage handelt, die aus den Einsatzstoffen, z.B. Biomasse (110), Biogas und/oder Biowasserstoff erzeugt.

22. Vorrichtung (100) nach Anspruch 19 oder 20, wobei es sich bei der Gasanlage (200) um eine pyrolytisch arbeitende Anlage handelt, welche die Einsatzstoffe in einer sauerstoffarmen oder sauerstofffreien Atmosphäre umsetzt.

23. Vorrichtung (100) nach Anspruch 22, wobei sie eine Vorrichtung zur Herstellung von Dünger (108) oder Düngerzusätzen umfasst.
